(19) **Europäisches Patentamt / European Patent Office / Office européen des brevets**

(11) **EP 3 477 282 B1**

(12) **EUROPEAN PATENT SPECIFICATION**

(45) Date of publication and mention
of the grant of the patent:
**09.02.2022 Bulletin 2022/06**

(21) Application number: **18199528.3**

(22) Date of filing: **10.10.2018**

(51) International Patent Classification (IPC):
**G01N 21/3563** *(2014.01)* **B07C 5/342** *(2006.01)*
**G01N 21/84** *(2006.01)*

(52) Cooperative Patent Classification (CPC):
**G01N 21/3563; B07C 5/342; G01N 2021/845**

(54) **METHOD AND APPARATUS DETERMINING RESIN COLOR**

VERFAHREN UND VORRICHTUNG ZUR BESTIMMUNG VON HARZFARBE

PROCÉDÉ ET APPAREIL DE DÉTERMINATION DE COULEUR DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2017 JP 2017209068**
**26.06.2018 JP 2018121184**

(43) Date of publication of application:
**01.05.2019 Bulletin 2019/18**

(73) Proprietor: **Panasonic Intellectual Property Management Co., Ltd.**
**Osaka-shi, Osaka 540-6207 (JP)**

(72) Inventors:
• **SUZUKI, Noriyuki**
**Osaka, 540-6207 (JP)**
• **HAMADA, Shingo**
**Osaka, 540-6207 (JP)**

(74) Representative: **Vigand, Philippe et al**
**Novagraaf International SA**
**Chemin de l'Echo 3**
**1213 Onex - Genève (CH)**

(56) References cited:
**JP-B2- 6 160 475**

• **WOLFGANG BECKER ET AL: "Detection of Black Plastics in the Middle Infrared Spectrum (MIR) Using Photon Up-Conversion Technique for Polymer Recycling Purposes", POLYMERS, vol. 9, no. 435, 8 September 2017 (2017-09-08), XP055537028, DOI: 10.3390/polym9090435**
• **HOGSTEDT LASSE ET AL: "Identification of black plastics using an upconversion based mid-infrared imaging spectrograph", 2017 CONFERENCE ON LASERS AND ELECTRO-OPTICS EUROPE & EUROPEAN QUANTUM ELECTRONICS CONFERENCE (CLEO/EUROPE-EQEC), IEEE, 25 June 2017 (2017-06-25), page 1, XP033239769, DOI: 10.1109/CLEOE-EQEC.2017.8086844 [retrieved on 2017-10-26]**
• **ABRAHAM VÁZQUEZ-GUARDADO ET AL: "Multi-spectral infrared spectroscopy for robust plastic identification", APPLIED OPTICS, vol. 54, no. 24, 18 August 2015 (2015-08-18), page 7396, XP055537507, WASHINGTON, DC; US ISSN: 0003-6935, DOI: 10.1364/AO.54.007396**
• **OFFER ROZENSTEIN ET AL: "Development of a new approach based on midwave infrared spectroscopy for post-consumer black plastic waste sorting in the recycling industry", WASTE MANAGEMENT., vol. 68, 20 July 2017 (2017-07-20), pages 38-44, XP055537513, US ISSN: 0956-053X, DOI: 10.1016/j.wasman.2017.07.023**

**Description**

1. Technical Field

The present disclosure relates to a resin determination method and a resin determination apparatus of resin colors in a sorting target which is a collection of a plurality of small pieces.

2. Description of the Related Art

Global environmental problems such as global warming and depletion of natural resources arise due to economic activities like mass consumption and mass throw-away.

In such a circumstance, with an aim of building a resource recycling society, the Home Appliance Recycling Law has been in force in Japan since April 2001. By the Home Appliance Recycling Law, recycling of used home appliances (for example, an air conditioner, a television set, a refrigerator, a freezer, a washing machine, a clothes dryer, and the like) is mandatory. In this manner, after being dissembled and crushed into small pieces in a home appliance recycling yard, the used home appliances are sorted and collected for each material type by utilizing magnetism, wind power, vibration, and the like, and are recycled as recycled materials. As a resin material, polypropylene (hereinafter referred to as PP), polystyrene (hereinafter referred to as PS), or acrylonitrile butadiene styrene (hereinafter referred to as ABS) is used in abundance in home appliances. The resin materials are sorted and collected for each resin type by a sorting apparatus that utilizes light absorption characteristics depending on a molecular structure of the resin in a near-infrared ray range (for example, a wavelength range of 1 to 3 $\mu$m).

The resin sorting apparatus irradiates resin pieces transported on a conveyor with light in the near-infrared ray range, detects a reflection spectrum or an absorption spectrum from the resin pieces in a non-contact manner, and determines the resin type. Therefore, it is possible for such an apparatus to perform sorting process a large number of resin pieces.

However, a black resin or the like including carbon black (carbon-based fine particles) which is used in small home appliances, automobiles, or the like, absorbs light in the near-infrared ray range. For this reason, clear reflection spectrum or absorption spectrum is not obtained and sorting is not possible in some cases.

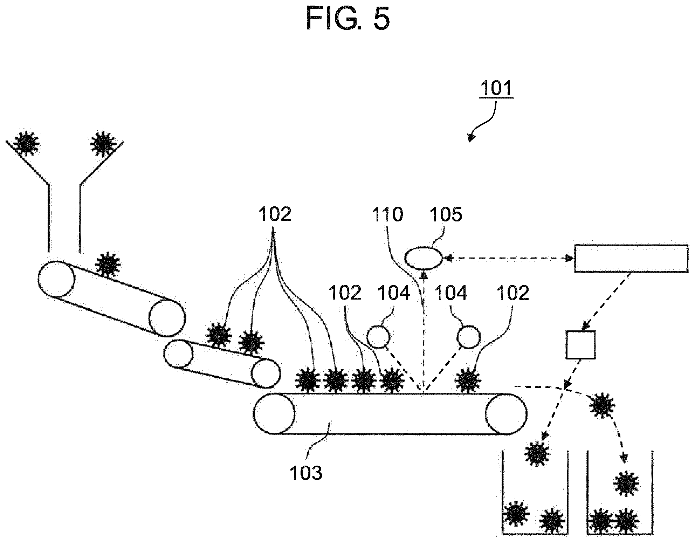

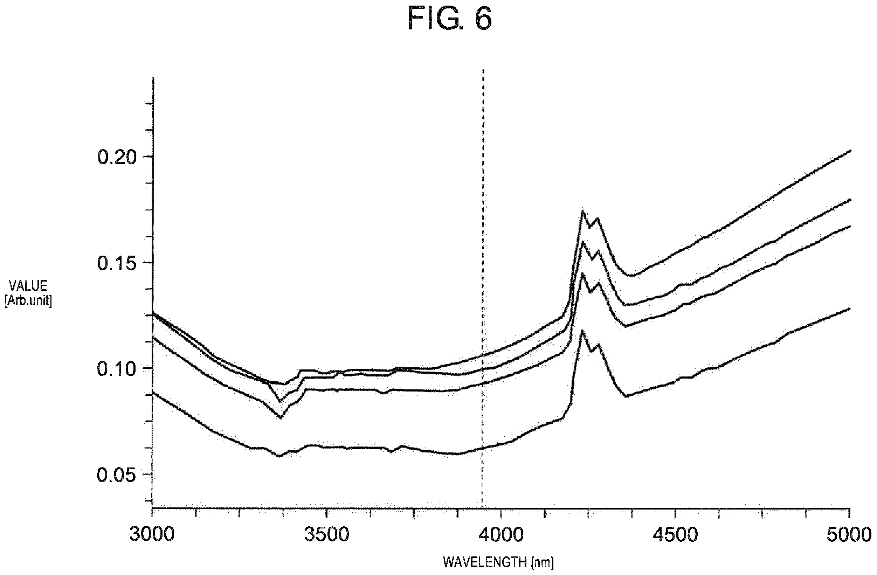

Japanese Patent No. 5367145 (PTL 1) proposes an apparatus in consideration of the problem regarding the recycling of resin materials. PTL 1 describes a technology in which black waste plastic pieces 102 flowing on transport conveyor 103 are irradiated with an infrared ray from infrared ray light source 104 in material identifying device 101 for identifying black waste plastic as illustrated in FIG. 5. Next, reflected light 110 is detected by mid-infrared ray sensor 105. Next, a reflection spectrum is acquired and the resin type is determined, the reflection spectrum being peculiar to the resin type in a mid-infrared ray range (for example, a wavelength range is 3 $\mu$m to 5 $\mu$m) in which an influence of carbon black is reduced as illustrated in FIG. 6. In addition, the article of Wolfgang Becker et al., "Detection of Black Plastics in the Middle Infrared Spectrum (MIR) Using Photon Up-Conversion Technique for Polymer Recycling Purposes", published in Polymers 2017, 9, 435 (PTL 2) discloses the detection of black plastics in the Middle Infrared Spectrum (MIT) using photon up-conversion technique for polymer recycling pursoses.

JP 6 160475 B2 describes a method for distinguishing ABS and PS resins according to black or white color using MIR reflection spectrum in a wavelength range from 4.48 $\mu$m to 5.08 $\mu$m.

Hogstedt Lasse et al. describes in "Identification of black plastics using an upconversion based mid-infrared imaging spectrograph", published in(CLEO/EUROPE-EQEC), IEEE 2017, a method for identifying black plastic types using mid-infrared reflection spectroscopy in the wavelength range from 3 $\mu$m to 5 $\mu$m.

Abraham Vázquez-Guardado et al. describes in "Multi-spectral infrared spectroscopy for robust plastic identification", published in Applied Optics, vol. 54, no. 24, 18 August 2015, page 7396, a method for identifying different resin colors, including black color, based on multi-spectral infrared spectroscopy.

Offer Rozenstein et al. describes in "Development of a new approach based on midwave infrared spectroscopy for post-consumer black plastic waste sorting in the recycling industry", published in WASTE MANAGEMENT, vol. 68, 20 July 2017, pages 38-44, a method for sorting black plastics from plastics of other colors based on mid-infrared reflectance measurements in a wavelength range from 3 $\mu$m to 12 $\mu$m.

SUMMARY

The present invention is defined by the appended claims.

BRIEF DESCRIPTION OF THE DRAWINGS

FIG. 1 is a schematic view of a resin determination apparatus according to an embodiment;

FIG. 2 is a graph of resin spectrum of the resin determination apparatus according to an embodiment;

FIG. 3 is a graph of resin spectrum to be used in determining by the resin determination apparatus according to an embodiment;

FIG. 4 is a flowchart indicating a flow of determining resin by the resin determination apparatus according to an embodiment;

FIG. 5 is a schematic view of a resin determination apparatus in the related art; and

FIG. 6 is a graph of black reflection spectrum in a resin determination in the related art.

## DETAILED DESCRIPTION

Generally, resin pieces, which are a sorting target, are in a state where the resin types and the resin colors are mixed, and sorting is required for each resin type and resin color.

However, with the technology described in PTL 1 as illustrated in FIG. 5, it is not possible to determine with whether a resin is white or black with high accuracy, and it is necessary to use a color sorting apparatus for visible light in combination to sort out resin colors. As a result, processing takes a long time since sorting is performed with the two of a sorting apparatus of mid-infrared ray and the color sorting apparatus of visible light. Alternatively, also in the apparatus illustrated in FIG. 5, a method is considered to determine colors of a white resin and a black resin based on the amount of light received by mid-infrared ray sensor 105 by utilizing the fact that the black resin, which includes carbon black, reflects less light than the white resin. However, variations in the surface state of the resin pieces as a sorting target into which used home appliances are crushed are so large that it is not possible to determine the resin color with high accuracy in some cases. The intensity of reflected light varies greatly, depending on variations in roughness such as an inclination angle and unevenness and dents of the resin surface, and whether the surface is a glossy surface or a diffuse surface. Since carbon black impacts less as the wavelength of light gets longer, an intensity difference of reflected lights caused by presence or absence of carbon black is smaller in mid-infrared light range than in the visible light or near-infrared light range. Therefore, an impact of variations of the surface state on the amount of reflected light becomes relatively large in the mid-infrared ray range, so that it becomes difficult to determine the resin color with high accuracy.

In the following, embodiments of the present disclosure will be described in detail with reference to the drawings.

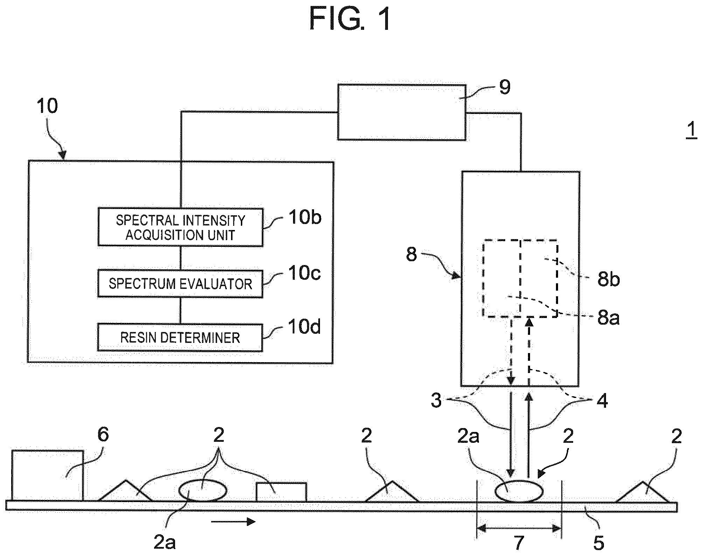

FIG. 1 is a schematic view of resin determination apparatus 1 according to an embodiment.

Resin 2 is an example of an object to be sorted and is a resin with mixed resin colors. A configuration of resin determination apparatus 1 that determines resin color from resin 2 with high accuracy will be described with reference to FIG. 1.

Resin determination apparatus 1 includes at least infrared ray detection unit 8 that includes irradiator 8a, light receiver 8b and calculation processor 10.

Irradiator 8a irradiates resin 2, which is an example of an object, with irradiation light 3 such as an infrared ray (that is, infrared light).

Light receiver 8b receives reflected light 4 such as an infrared ray (that is, infrared light) from resin 2 irradiated with irradiation light 3 from irradiator 8a.

Calculation processor 10 determines the resin color of an object from the reflection spectrum or the absorption spectrum of resin 2 based on reflected light 4.

Calculation processor 10 includes at least spectral intensity acquisition unit 10b, spectrum evaluator 10c (evaluator), and resin determiner 10d (determiner).

Spectral intensity acquisition unit 10b acquires a spectral intensity based on reflected light 4. First, analog data of reflected light 4 received by light receiver 8b is input into spectral intensity acquisition unit 10b of calculation processor 10 via digital data converter 9 from light receiver 8b. The analog data of reflected light 4 is converted into digital data of reflected light 4 in digital data converter 9. Spectral intensity acquisition unit 10b calculates the reflection spectrum or the absorption spectrum of resin 2 based on the input digital data of reflected light 4. Then, spectral intensity acquisition unit 10b converts the calculated reflection spectrum or absorption spectrum into a table or a graph that represents a relationship between the reflection spectrum and the spectral intensity or between the absorption spectrum and the spectral intensity, and acquires the spectral intensity to be used in resin determination from the table or the graph.

At this time, spectral intensity acquisition unit 10b acquires the spectral intensity of a wavelength range, out of the reflection spectrum and the absorption spectrum, having a lower limit value of greater than or equal to 3.48 $\mu$m and less than or equal to 4.22 $\mu$m and an upper limit value of greater than or equal to 4.29 $\mu$m and less than or equal to 4.48 $\mu$m, as the spectral intensity to be used in resin determination. A purpose of acquiring the spectral intensity of such a wavelength range is to acquire the spectral intensity of a range in which carbon dioxide exerts influence and to facilitate the determination of the obtained reflection spectrum or absorption spectrum.

Spectrum evaluator 10c obtains correlation information representing the correlation between the spectral intensity which is acquired by spectral intensity acquisition unit 10b and is to be used in resin determination and the spectrum data of a plurality of resin colors acquired in advance.

Resin determiner 10d determines the resin color related to correlation information, out of a plurality of correlation information obtained by spectrum evaluator 10c, which is greater than or equal to a preset threshold value and has the highest correlation, as the resin color of resin 2 of the object.

Infrared ray detection unit 8 includes functions to irradiate resin 2 with irradiation light 3 of an infrared ray and to receive reflected light 4 from resin 2 irradiated with irradiation light 3. Infrared ray detection unit 8 is connected to calculation processor 10 via digital data converter 9.

Digital data converter 9 inputs an electric signal output according to reflected light 4 from infrared ray detection unit 8. Digital data converter 9 converts the input electric signal into the digital data and then outputs the converted digital data into the calculation processor 10.

In calculation processor 10, the reflection spectrum or the absorption spectrum of resin 2 is calculated based on the digital data output from digital data converter 9, and then the spectral intensity to be used in resin determination is acquired by spectral intensity acquisition unit 10b from the calculated reflection spectrum or absorption spectrum.

In FIG. 1, a belt of belt conveyor 5 moves at a constant speed. Belt conveyor 5 is an example of a conveyor that conveys resin 2. By belt conveyor 5, resin 2 is conveyed from input region 6 to detection region 7 in a longitudinal direction of belt conveyor 5.

Infrared ray detection unit 8 is disposed above detection region 7 of belt conveyor 5 to face detection region 7. In detection region 7, resin 2 is irradiated with irradiation light 3 from irradiator 8a, and reflected light 4 reflected from resin 2 is received by light receiver 8b.

Spectral intensity acquisition unit 10b of calculation processor 10 analyzes information output from digital data converter 9 and acquires the reflection spectrum or the absorption spectrum of resin 2. Further, spectral intensity acquisition unit 10b of calculation processor 10 processes the spectral intensity of the range in which carbon dioxide exerts influence into the spectral intensity to be used in resin determination so that determination of the obtained reflection spectrum or absorption spectrum is facilitated. Further, in calculation processor 10, the spectrum data of resin color registered in advance is collated with the acquired spectral intensity to be used in resin determination by spectrum evaluator 10c and resin color of resin 2 is determined by resin determiner 10d.

Next, a method of calculating, by calculation processor 10, the spectral intensity to be used in resin determination from the digital data input in calculation processor 10 will be briefly described.

The electric signal photoelectrically converted by light receiver 8b of infrared ray detection unit 8 according to reflected light 4 depends on the intensity of the received light. Therefore, it is possible to acquire information on the intensity of reflected light 4 from resin 2 from the digital data converted by digital data converter 9. It is possible for spectral intensity acquisition unit 10b to acquire the spectral intensity of resin 2 to be used in resin determination from the acquired intensity of reflected light 4.

Spectral intensity acquisition unit 10b processes the spectral intensity to be used in resin determination into the spectral intensity to be used in resin determination to determine resin color by using the absorption range of carbon dioxide and determines resin color of resin 2.

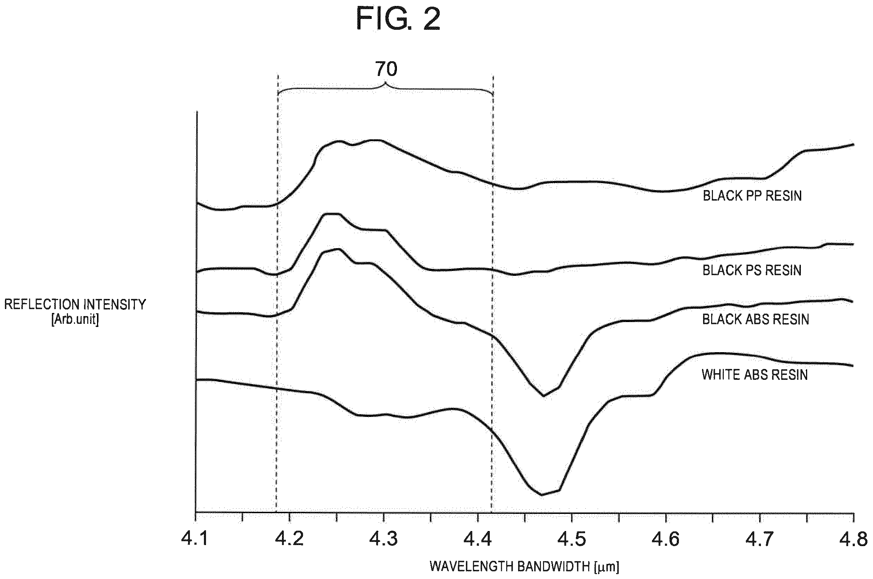

Here, before a method of determining resin color according to an embodiment is described, the influence of carbon dioxide on resin color generated in mid-infrared ray range (for example, the wavelength range is 3 $\mu$m to 5 $\mu$m) is described with reference to FIG. 2.

FIG. 2 is a graph illustrating the resin spectrum of the four references of a black ABS (acrylonitrile butadiene styrene) resin, a black PS (polystyrene) resin, a black PP (polypropylene) resin, which are derived from home appliances and include carbon black, and a white ABS resin which is derived from home appliances and do not contain carbon black. That is, FIG. 2 is a graph illustrating the spectral intensity in the wavelength bandwidth of 4.10 $\mu$m to 4.80 $\mu$m in each resin of these four references. In the graph illustrated in FIG. 2, the wavelength bandwidth is taken on the horizontal axis and the reflection intensity is taken on the vertical axis.

The carbon dioxide present in the air is an unsaturated molecule having a linear structure, and four types of vibrations exist as molecular vibrations such as two types of deformation vibrations, a symmetric stretching vibration and an antisymmetric stretching vibration. The two types of deformation vibrations are motions of periodically changing valence angle centered around carbon atoms, and light absorption occurs centered around the vicinity of 15.0 $\mu$m. Further, a symmetric stretching vibration is a symmetric vibration with respect to the direction of valence and does not appear in the infrared ray spectrum, since the vibration does not have a fixed bipolar efficiency like carbon dioxide.

However, in an antisymmetric stretching vibration which is an asymmetric vibration with respect to the direction of valence, light absorption occurs centered around the wavelength of 4.25 $\mu$m, 2349cm$^{-1}$, in wavenumber representation which is a reciprocal of a wavelength. Additionally, since carbon dioxide is gaseous in the air, the carbon dioxide is more excited than a solid or liquid molecular vibration, and the absorption spectrum appears more conspicuously.

When infrared absorption caused by the antisymmetric stretching vibration occurs and the reflection spectrum or the absorption spectrum is obtained from an object in a non-contact manner in the mid-infrared ray range (for example, the wavelength range is 3 $\mu$m to 5 $\mu$m), air exists as a medium between the object and the detection element. Therefore, the spectrum detected in the mid-infrared ray range is affected by carbon dioxide.

In FIG. 2, spectral changes with the peaks at around 4.25 μm, can be confirmed in the wavelength range 70 of greater than or equal to 4.18 μm and less than or equal to 4.42 μm in the black PP resin, the black PS resin and the black ABS resin. Incidentally, in the black ABS resin and the white ABS resin, the spectral changes with the peak at around the wavelength of 4.48 μm, 2230cm$^{-1}$ in wavenumber representation due to the stretching vibration of C≡N of nitrile contained in ABS resin can be confirmed.

On the other hand, in FIG. 2, in the wavelength range 70 of greater than or equal to 4.18 μm and less than or equal to 4.42 μm, the spectral changes with peaks at around 4.25 μm witnessed in the black PP resin, the black PS resin, and the black ABS resin cannot be confirmed in white ABS resin. The reason for this is deemed to be as follows. In the wavelength range affected by carbon dioxide, both light absorption peaking at around 4.25 μm caused by the antisymmetric stretching vibration of carbon dioxide and carbon black correlated with resin color of resin 2 affect. However, in the wavelength ranges less than or greater than the wavelength range (that is, wavelength ranges less than or greater than the wavelength range 70), light absorption exerts no influence, and only carbon black exerts influence.

In the resin determination apparatus according to an embodiment of the disclosure, the correlations between the signal output and the amount of infrared ray of infrared ray detection unit 8 are adjusted so that the spectral changes in white resin caused by carbon dioxide in wavelength range affected by carbon dioxide and in wavelength ranges less than or greater than the wavelength range affected by carbon dioxide are reduced. Therefore, the correlation between the signal output and the amount of infrared ray input into infrared ray detection unit 8 in the wavelength range affected by carbon dioxide is different from the correlation between the signal output and the amount of infrared ray input into infrared ray detection unit 8 in the wavelength ranges less than or greater than the wavelength range. As a result, in FIG. 2, the spectral changes with the spectral peaks at around 4.25 μm, due to the carbon black, in the black PP resin, the black PS resin, and the black ABS resin, caused by carbon black, can be confirmed in the wavelength range 70 of greater than or equal to 4.18 μm and less than or equal to 4.42 μm. On the other hand, the spectral change witnessed in the black resins cannot be confirmed in the white ABS resin.

By adjusting the correlation between signal output and the amount of infrared ray input into the infrared ray detection unit 8, the spectral change, due to the influence of light absorption caused by antisymmetric stretching vibration of carbon dioxide and the influence of carbon black correlated with resin color of resin 2, varies. An adjustment is performed in the air to make the spectral change as small as possible in the wavelength range affected by carbon dioxide and in the wavelength ranges less than or greater than the same by using a calibration tool capable of obtaining a uniform intensity, close to the reflection intensity of the white resin, at each wavelength in the wavelength range affected by carbon dioxide and in the wavelength ranges before and after the same. With such a configuration, the spectrum close to the one illustrated in FIG. 2 can be obtained.

In the spectral intensity acquisition unit 10b, to determine resin color of resin 2, the wavelength range is set to have a lower limit value of greater than or equal to 3.48 μm and less than or equal to 4.22 μm and an upper limit value of greater than or equal to 4.29 μm and less than or equal to 4.48 μm. The reason for setting the limits will be described below.

First, the theoretical wavelength at which carbon dioxide performs antisymmetric stretching vibration is 4.25 μm, 2349cm$^{-1}$ in wavenumber representation. It is preferable that the wavelength bandwidth affected by carbon dioxide includes a range of 2349±20cm$^{-1}$ in wavenumber representation, 4.22 μm to 4.29 μm in wavelength representation.

Further, since PP, PS, and ABS are used in abundance as resin materials, it is necessary to suppress to the utmost the influence of the spectrum intrinsic to each type of resins of PP, PS, and ABS to determine resin color of resin 2. In FIG. 2, a spectral change with a peak at around the wavelength of 4.48 μm, 2230cm$^{-1}$ in wavenumber representation due to the stretching vibration of nitrile included in ABS resin is confirmed. Therefore, it is preferable that the upper limit value of the wavelength range for determining resin color of resin 2 is included for sure in the wavelength bandwidth affected by carbon dioxide. It becomes possible to further suppress the influence of ABS resin on the spectrum by setting the wavelength range between 4.29 μm and 4.48 μm, at which spectral change caused by stretching vibration of nitrile peaks.

Next, the spectrum of PP resin and PS resin will be described. In PP resin, spectral change occurs due to a stretching vibration of the methyl group with a peak at around the wavelength of 3.48 μm, 2870cm$^{-1}$ in wavenumber representation. In PS resin, spectral change occurs due to the stretching vibration of a benzene ring with a peak at around the wavelength of 3.27 μm, 3055cm$^{-1}$ in wavenumber representation. Therefore, it is preferable that the lower limit value of wavelength range for determining the resin color of resin 2 is set between 3.48 μm and 4.22 μm; the former being the longer wavelength of the wavelengths at which spectral changes of PP resin and PS resin occur respectively, and the latter being the lower limit of wavelength that is preferably included for sure in the wavelength bandwidth affected by carbon dioxide. In this way, it is possible to suppress the influence of the spectrum of PP resin and PS resin.

Further, in a wavelength range with the lower limit value of greater than or equal to 3.48 μm and less than or equal to 4.22 μm and the upper limit value of greater than or equal to 4.29 μm and less than or equal to 4.48 μm, the wavelength range of greater than or equal to 4.18 μm and less than or equal to 4.42 μm, in which the spectral shape change due to the influence of carbon dioxide is large, is preferable for determining the resin color of resin 2. Within this range, the spectral shape change due to the effect of carbon dioxide can be utilized, and the resin color of resin 2 can be determined with the influence of intensity variation of the reflected light caused by surface variation of resin 2 being suppressed to the utmost.

Further, in the wavelength range of greater than or equal to 4.18 $\mu$m and less than or equal to 4.42 $\mu$m, the light absorption theoretical wavelength of the nitrile group contained in the ABS resin is 4.48 $\mu$m, and the upper limit value of the wavelength range is 4.42 $\mu$m. The difference of 0.06 $\mu$m is small so that there remains a possibility that the nitrile group affects. Further, the difference of 0.7 $\mu$m between the light absorption theoretical wavelength of 3.48 $\mu$m of the methyl group contained in the PP resin and the lower limit value of 4.18 $\mu$m of wavelength range is big, so that the possibility that the methyl group affects is low. The light absorption theoretical wavelength of the benzene ring contained in PS resin is 3.27 $\mu$m, so that the possibility that the benzene ring affects is low. To eliminate the influence of this nitrile group, it is preferable to have a wavelength range that has an upper limit of 4.34 $\mu$m which is shorter than the mid-wavelength between the wavelength range upper limit value of 4.42 $\mu$m, 2262cm$^{-1}$ in wavenumber representation, and the upper limit value of 4.29 $\mu$m, 2329cm$^{-1}$ in wavenumber representation of wavelength range, affected by carbon dioxide, in the wavelength range of greater than or equal to 4.18 $\mu$m and less than or equal to 4.42 $\mu$m, in which spectral shape change by the influence of carbon dioxide is large. In other words, it is preferable that the wavelength range narrows down to greater than or equal to 4.18 $\mu$m and less than or equal to 4.34 $\mu$m.

The reason for setting the upper limit value of the wavelength range at 4.34 $\mu$m is described in the following. The wavelength resolution of 0.01 $\mu$m in wavelength representation is not sufficient for distinguishing the spectral shape changes of carbon dioxide. The wavelength resolution of 0.0075 $\mu$m in wavelength representation, 4cm$^{-1}$ in wavenumber representation, is preferable. Considering 4cm$^{-1}$ as one block, 2265cm$^{-1}$, the sixteenth block from 2329cm$^{-1}$, as an origin which is the upper limit value wavelength in the wavelength range affected by carbon dioxide, is the upper limit value in the wavelength range in which spectral shape change due to the influence of carbon dioxide is large. To eliminate the influence of the nitrile group, it is preferable to narrow down the range to a wavelength range which is compatible with easy extraction of a feature of spectral shape change of carbon dioxide and has, as an upper limit value thereof, a wavelength closer to the upper limit value of the wavelength range affected by carbon dioxide than a point one block short from the middle point. The eighth block from the middle point is 2297cm$^{-1}$ in wavenumber representation and 4.353 $\mu$m in wavelength representation, and the point one block short from the middle point is 2301cm$^{-1}$ in wavenumber representation and 4.346 $\mu$m in wavelength representation. When a significant number is represented by a number with two digits after a decimal point, it is preferable that a wavelength of 4.34 $\mu$m, which is 2304cm$^{-1}$ in wavenumber representation, is an upper limit set as a wavelength closer to the upper limit value of the wavelength range affected by carbon dioxide than a point one block short from the middle point.

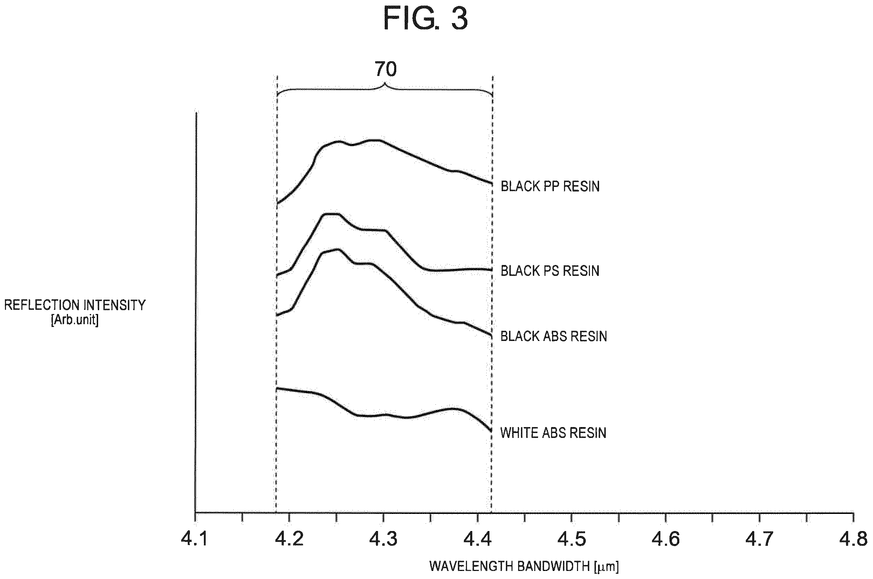

FIG. 3 is a graph representing the resin spectrum in a wavelength range of greater than or equal to 4.18 $\mu$m and less than or equal to 4.42 $\mu$m to be used in the determination in an embodiment of the disclosure. By using the four types of spectral intensities represented in FIG. 3, a correlation coefficient, is obtained by using spectral intensities, and a verification of the determination possibility is performed. The correlation coefficient $\gamma$ is obtained by the following expression (1).

$$r = \frac{\sum (x - \bar{x})(y - \bar{y})}{\sqrt{\sum (x - \bar{x})^2 \sum (y - \bar{y})^2}}$$

$$\ldots (1)$$

Here, x denotes a reference spectral intensity, and y denotes a comparison spectral intensity.

$\bar{X}$ is an average intensity of reference spectrum.
$\bar{y}$ is an average intensity of comparison spectrum.

When the reflection spectrum of the black ABS resin serves as a reference spectrum, according to expression (1), the correlation coefficients are 0.96 for the black PS resin, 0.79 for the black PP resin, and 0.22 for the white ABS resin respectively. The closer the match with the reference spectrum, the more closely the absolute value of the correlation coefficient approaches 1. Therefore, a black PS resin or a black PP resin has a higher correlation coefficient and a closer match with the black ABS resin than the white ABS resin. Thus, it is possible to determine the colors of black and white regardless of resin types, by calculating the correlation coefficient by using spectral intensities in the wavelength bandwidth of greater than or equal to 4.18 $\mu$m and less than or equal to 4.42 $\mu$m which is affected by light absorption by carbon dioxide.

Next, a method of detecting the resin color of resin 2 by using resin determination apparatus 1 will be described.

In infrared ray detection unit 8, the light source of irradiator 8a that emits irradiation light 3 is a light source having two or more of broad wavelength ranges like a black body light source or a single wavelength light source having absorption wavelength range of the resin to be determined. Further, it is said that the light receiving element of light receiver 8b in infrared ray detection unit 8 has a light receiving element receiving reflected light 4 for each wavelength from the light source. Digital data converter 9 converts the analog data from the light receiving element into digital data and transmits the digital data to calculation processor 10. Calculation processor 10 calculates the reflection intensity of each wavelength, that is, the spectral intensity, based on the digital data output, transmitted from digital data converter 9, from the light receiving element, and determines the resin color of resin 2 by evaluating the spectral intensity in a range in which carbon dioxide exerts influence.

Specifically, the reference spectral intensity is acquired from the resin, the physical properties of which are already known, and, the spectral intensity to be used in resin determination in a region in which carbon dioxide exerts influence is obtained from the spectral intensity obtained from resin 2, the determination target. Next, a correlation coefficient between the acquired spectral intensity and the reference spectral intensity is calculated by the expression (1) and the resin color of resin 2 is determined by a determination algorithm by which the calculated correlation coefficient is compared with a preset threshold.

Here, as a determination algorithm, a method of using a correlation coefficient is described. However, other methods such as a regression analysis are selected, as deemed appropriate.

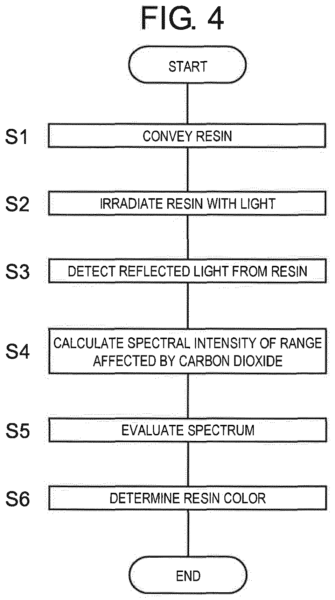

Next, an operation of resin determination apparatus 1 illustrated in FIG. 1 will be described based on the flowchart illustrated in FIG. 4.

Here, a flow up to the determination of the resin color will be described in detail with a focus on single resin 2a out of a plurality of resins 2. Resin 2a is an ABS resin.

Further, in step S1, resin 2 is input in input region 6 on belt conveyor 5 that moves at a constant speed and is transported to the detection region 7 on belt conveyor 5.

Next, in step S2, the infrared ray detection unit 8 irradiates resin 2a that has reached the detection region 7 with irradiation light 3 from a light source.

Next, in step S3, the infrared ray detection unit 8 detects reflected light 4 from the resin 2a that has reached the detection region 7. Reflected light 4 is a light obtained by the irradiation light 3 being reflected back into from resin 2a.

Next, in step S4, the analog data of reflected light 4 detected by infrared ray detection unit 8 is converted into digital data through digital data converter 9 from infrared ray detection unit 8, and is output to calculation processor 10. In the calculation processor 10, the spectral intensity acquisition unit 10b acquires the reflection spectrum or the absorption spectrum of resin 2, based on the input digital data of reflected light 4. The spectral intensity acquisition unit 10b processes the acquired reflection spectrum or absorption spectrum into the spectral intensity to be used in resin determination, in the range (for example, a wavelength bandwidth of greater than or equal to 4.18 $\mu$m and less than or equal to 4.42 $\mu$m) in which carbon dioxide exerts influence as stated above.

Next, in step S5, the spectrum evaluator 10c calculates and evaluates the correlation coefficient between the reference spectrum and the spectrum to be used in resin determination, based on the reference spectral and the spectral intensity to be used in resin determination acquired by spectral intensity acquisition unit 10b. Here, the reference spectrum is the spectral intensity of a resin acquired in advance, the physical properties of which are already known.

Next, in step S6, based on the correlation coefficient with the reference spectrum and the preset threshold, the resin determiner 10d determines that the resin having a correlation coefficient of greater than or equal to the threshold and the greatest correlation coefficient is the resin color of resin 2, the object.

As described above, according to the resin determination method of an embodiment, when determination and sorting of resin 2, the object, are performed by using the reflection spectrum or the absorption spectrum in the mid-infrared ray range, the correlation information is utilized of the spectral intensity of the wavelength bandwidth, affected by light absorption caused by carbon dioxide, having the wavelength of greater than or equal to 3.48 $\mu$m and less than or equal to 4.22 $\mu$m as a lower limit value and the wavelength of greater than or equal to 4.29 $\mu$m and less than or equal to 4.48 $\mu$m as an upper limit value. With this configuration, it is possible to determine the resin color of resin 2, an example of the object, with high accuracy, out of the resin in which the resin colors and the resin types of resin 2 are mixed, with the influence on the spectrum depending on surface condition of resin and resin type being suppressed to the utmost.

Further, this disclosure is not limited to the embodiments described above and can be implemented in various other embodiments. For example, as a modified example of the embodiment, as illustrated in FIG. 2, when determination and sorting of resin 2, the object, are performed by using the reflection spectrum or the absorption spectrum in the infrared ray range, the resin type may be determined in addition to resin color determination, in the spectrum outside the wavelength bandwidth being affected by light absorption caused by carbon dioxide and having the wavelength of greater than or equal to 3.48 $\mu$m and less than or equal to 4.22 $\mu$m as a lower limit value and the wavelength of greater than or equal to 4.29 $\mu$m and less than or equal to 4.48 $\mu$m as an upper limit value. In the example illustrated in FIG. 2, it is possible to determine the ABS resin. According to this modified example, it is possible to determine the resin color and the resin type of resin 2.

Since the technology described in PTL 1 cannot sort out the resin color of resin 2 with high accuracy, it is necessary to use a color sorting apparatus of visible light in combination. However, according to this modified example, it is possible to determine the resin color and the resin type of resin 2 by the sorting apparatus in mid-infrared ray range.

The resin determination method and the resin determination apparatus of the disclosure utilize the correlation information of the spectral intensity in the wavelength bandwidth being affected by light absorption caused by carbon dioxide and having a wavelength of greater than or equal to 3.48 $\mu$m and less than or equal to 4.22 $\mu$m as a lower limit value and the wavelength of greater than or equal to 4.29 $\mu$m and less than or equal to 4.48 $\mu$m as an upper limit value. Thereby, with the influence of the spectrum depending on the surface condition and the resin type of the resin being suppressed to the utmost, it is possible to determine the resin color of the object with high accuracy out of the resin in which the resin color and the resin type are mixed. The resin determination method and the resin determination apparatus can quickly determine black resin and the like including carbon black (carbon based fine particles) by using a mid-infrared ray. Therefore, it is possible to use the method and the apparatus in a recycling process and the like where a plurality of objects are sorted out quickly.

**Claims**

1. A resin determination method for distinguishing black from another color of a resin, the method comprising:

   irradiating a resin object with an infrared light;
   receiving a reflected light from the resin object irradiated with the infrared light;
   obtaining an object spectral intensity of a reflection or an absorption spectrum obtained from the light reflected by the resin object, the spectral intensity of the spectrum being in a wavelength range having a lower limit value of greater than or equal to 3.48 $\mu$m and less than or equal to 4.22 $\mu$m, and an upper limit value of greater than or equal to 4.29 $\mu$m and less than or equal to 4.48 $\mu$m;
   obtaining correlation coefficients indicating a correlation between the object spectral intensity and a spectrum data, the spectrum data comprising reference spectral intensities of a plurality of resin colors acquired in advance; and
   determining resin color based on the correlation coefficient which is greater than or
   equal to a preset threshold value and has a highest correlation coefficient, out of the obtained correlation coefficients, as a black or another resin color of the object.

2. The resin determination method of Claim 1,
   wherein the lower limit value of the wavelength range is greater than or equal to 4.18 $\mu$m and the upper limit value of the wavelength range is less than or equal to 4.42 $\mu$m.

3. The resin determination method of Claim 2,
   wherein the upper limit value of the wavelength range is less than or equal to 4.34 $\mu$m.

4. A resin determination apparatus (1) for distinguishing black from another color of a resin, the apparatus (1) comprising:

   an irradiator (8a) adapted to irradiate a resin object (2) with an infrared light;
   a light receiver (8b) adapted to receive reflected light from the resin object (2) irradiated with the infrared light from the irradiator; and
   a calculation processor (10) adapted to determine a black or another resin color of the object,
   wherein the calculation processor (10) includes a spectral intensity acquisition unit (10b) adapted to acquire an object spectral intensity of an reflection or an absorption spectrum obtained from the light reflected by the resin object, the spectral intensity of the spectrum being in a wavelength range having a lower limit value of greater than or equal to 3.48 $\mu$m and less than or equal to 4.22 $\mu$m, and an upper limit value of greater than or equal to 4.29 $\mu$m and less than or equal to 4.48 $\mu$m,
   an evaluator (10c) adapted to obtain correlation coefficients indicating a correlation between the object spectral intensity obtained by the spectral intensity acquisition unit (10b) and spectrum data comprising reference spectral intensities of a plurality of resin colors acquired in advance, and
   a determiner (10d) adapted to determine resin color based on the correlation coefficient which is greater than or equal to a preset threshold value and has a highest correlation coefficient,
   out of the correlation coefficients obtained by the evaluator (10c), as a black or another resin color of the object.

5. The resin determination apparatus (1) of Claim 4,
wherein the wavelength range set in the calculation processor has a lower limit value of greater than or equal to 4.18 $\mu$m and a upper limit value of less than or equal to 4.42 $\mu$m.

6. The resin determination apparatus (1) of Claim 5,
wherein the wavelength range set in the calculation processor has a upper limit value of less than or equal to 4.34 $\mu$m.

**Patentansprüche**

1. Harzbestimmungsverfahren zum Unterscheiden von Schwarz von einer anderen Farbe eines Harzes, wobei das Verfahren umfasst:

   Bestrahlen eines Harzgegenstands mit einem Infrarotlicht;
   Empfangen eines reflektierten Lichts von dem mit dem Infrarotlicht bestrahlten Harzgegenstand;
   Erhalten einer spektralen Gegenstandsintensität eines Reflexions- oder Absorptionsspektrums, das aus dem vom Harzobjekt reflektierten Licht gewonnen wurde, wobei die spektrale Intensität des Spektrums in einem Wellenlängenbereich liegt, der einen unteren Grenzwert von größer oder gleich 3,48 $\mu$m und kleiner oder gleich 4,22 $\mu$m und einen oberen Grenzwert von größer oder gleich 4,29 $\mu$m und kleiner oder gleich 4,48 $\mu$m aufweist;
   Erhalten von Korrelationskoeffizienten, die eine Korrelation zwischen der spektralen Gegenstandsintensität und Spektrumsdaten angeben, wobei die Spektrumsdaten spektrale Bezugsintensitäten einer Vielzahl von Harzfarben umfassen, die im Voraus erfasst wurden; und
   Bestimmen der Harzfarbe basierend auf dem Korrelationskoeffizienten, der größer oder gleich einem voreingestellten Schwellenwert ist und von den erhaltenen Korrelationskoeffizienten einen höchsten Korrelationskoeffizienten aufweist, als Schwarz oder eine andere Harzfarbe des Gegenstands.

2. Harzbestimmungsverfahren nach Anspruch 1,
wobei der untere Grenzwert des Wellenlängenbereichs größer oder gleich 4,18 $\mu$m ist und der obere Grenzwert des Wellenlängenbereichs kleiner oder gleich 4,42 $\mu$m ist.

3. Harzbestimmungsverfahren nach Anspruch 2,
wobei der obere Grenzwert des Wellenlängenbereichs kleiner oder gleich 4,34 $\mu$m ist.

4. Harzbestimmungsvorrichtung (1) zum Unterscheiden von Schwarz von einer anderen Farbe eines Harzes, wobei die Vorrichtung (1) umfasst:

   eine Bestrahlungseinrichtung (8a), die geeignet ist, einen Harzgegenstand (2) mit einem Infrarotlicht zu bestrahlen;
   einen Lichtempfänger (8b), der geeignet ist, reflektiertes Licht von dem mit dem Infrarotlicht von der Bestrahlungsreinrichtung bestrahlten Harzgegenstand (2) zu empfangen; und
   einen Berechnungsprozessor (10), der geeignet ist, eine schwarze oder eine andere Harzfarbe des Gegenstands zu bestimmen,
   wobei der Berechnungsprozessor (10) eine Einheit (10b) zur Erfassung der spektralen Intensität umfasst, die geeignet ist, eine spektrale Gegenstandsintensität eines Reflexions- oder Absorptionsspektrums, das aus dem vom Harzobjekt reflektierten Licht gewonnen wurde, wobei die spektrale Intensität des Spektrums in einem Wellenlängenbereich liegt, der einen unteren Grenzwert von größer oder gleich 3,48 $\mu$m und kleiner oder gleich 4,22 $\mu$m und einen oberen Grenzwert von größer oder gleich 4,29 $\mu$m und kleiner oder gleich 4,48 $\mu$m aufweist,
   eine Bewertungseinrichtung (10c), die geeignet ist, Korrelationskoeffizienten zu erhalten, die eine Korrelation zwischen der von der Einheit (10b) zur Erfassung der spektralen Dichte erhaltenen spektralen Gegenstandsintensität und Spektrumsdaten angeben, die im Voraus erfasste spektrale Bezugsintensitäten einer Vielzahl von Harzfarben umfassen, und
   eine Bestimmungseinrichtung (10d), die geeignet ist, die Harzfarbe basierend auf dem Korrelationskoeffizienten, der größer oder gleich einem voreingestellten Schwellenwert ist und von den durch die Bewertungseinrichtung (10c) erhaltenen Korrelationskoeffizienten einen höchsten Korrelationskoeffizienten aufweist, als eine schwarze oder eine andere Harzfarbe des Gegenstands zu bestimmen.

5. Harzbestimmungsvorrichtung (1) nach Anspruch 4,
wobei der in dem Berechnungsprozessor eingestellte Wellenlängenbereich einen unteren Grenzwert von größer oder gleich 4, 18 μm und einen oberen Grenzwert von kleiner oder gleich 4,42 μm aufweist.

**6.** Harzbestimmungsvorrichtung (1) nach Anspruch 5,
wobei der in dem Berechnungsprozessor eingestellte Wellenlängenbereich einen oberen Grenzwert von kleiner oder gleich 4,34 μm aufweist.

**Revendications**

**1.** Procédé de détermination de résine pour distinguer le noir d'une autre couleur d'une résine, le procédé comprenant :

l'irradiation d'un objet en résine avec une lumière infrarouge ;
la réception de la lumière réfléchie par l'objet en résine irradié avec la lumière infrarouge ;
l'obtention d'une intensité spectrale de l'objet d'un spectre de réflexion ou d'absorption obtenu à partir de la lumière réfléchie par l'objet en résine, l'intensité spectrale du spectre étant dans une gamme de longueurs d'onde ayant une valeur limite inférieure supérieure ou égale à 3,48 μm et inférieure ou égale à 4,22 μm, et une valeur limite supérieure supérieure ou égale à 4,29 μm et inférieure ou égale à 4,48 μm ;
l'obtention de coefficients de corrélation indiquant une corrélation entre l'intensité spectrale de l'objet et des données de spectre, les données de spectre comprenant des intensités spectrales de référence d'une pluralité de couleurs de résine acquises à l'avance ; et
la détermination de la couleur de la résine sur la base du coefficient de corrélation qui est supérieur ou égal à une valeur de seuil préétablie et a un coefficient de corrélation maximal, parmi les coefficients de corrélation obtenus, comme étant une couleur de résine noire ou autre de l'objet.

**2.** Procédé de détermination de résine selon la revendication 1,
dans lequel la valeur limite inférieure de la gamme de longueurs d'onde est supérieure ou égale à 4,18 μm et la valeur limite supérieure de la gamme de longueurs d'onde est inférieure ou égale à 4,42 μm.

**3.** Procédé de détermination de résine selon la revendication 2,
dans lequel la valeur limite supérieure de la gamme de longueurs d'onde est inférieure ou égale à 4,34 μm.

**4.** Dispositif de détermination de résine (1) pour distinguer le noir d'une autre couleur d'une résine, le dispositif (1) comprenant :

un irradiateur (8a) adapté pour irradier un objet en résine (2) avec une lumière infrarouge ;
un récepteur de lumière (8b) adapté pour recevoir la lumière réfléchie par l'objet en résine (2) irradié avec la lumière infrarouge provenant de l'irradiateur ; et
un processeur de calcul (10) adapté pour déterminer une couleur de résine noire ou autre de l'objet,
dans lequel le processeur de calcul (10) comprend une unité d'acquisition d'intensité spectrale (10b) adaptée pour acquérir une intensité spectrale de l'objet d'un spectre de réflexion ou d'absorption obtenu à partir de la lumière réfléchie par l'objet en résine, l'intensité spectrale du spectre étant dans une gamme de longueurs d'onde ayant une valeur limite inférieure supérieure ou égale à 3,48 μm et inférieure ou égale à 4,22 μm, et une valeur limite supérieure supérieure ou égale à 4,29 μm et inférieure ou égale à 4,48 μm,
un évaluateur (10c) adapté pour obtenir des coefficients de corrélation indiquant une corrélation entre l'intensité spectrale de l'objet obtenue par l'unité d'acquisition d'intensité spectrale (10b) et des données de spectre comprenant des intensités spectrales de référence d'une pluralité de couleurs de résine acquises à l'avance, et
un déterminateur (10d) adapté pour déterminer la couleur de la résine sur la base du coefficient de corrélation qui est supérieur ou égal à une valeur de seuil préétablie et a un coefficient de corrélation maximal, parmi les coefficients de corrélation obtenus par l'évaluateur (10c), comme étant une couleur de résine noire ou autre de l'objet.

**5.** Dispositif de détermination de résine (1) selon la revendication 4,
dans lequel la gamme de longueurs d'onde établie dans le processeur de calcul a une valeur limite inférieure supérieure ou égale à 4,18 μm et une valeur limite supérieure inférieure ou égale à 4,42 μm.

**6.** Dispositif de détermination de résine (1) selon la revendication 5,
dans lequel la gamme de longueurs d'onde établie dans le processeur de calcul a une valeur limite supérieure inférieure ou égale à 4,34 μm.

# FIG. 1

EP 3 477 282 B1

FIG. 2

EP 3 477 282 B1

# FIG. 3

70

REFLECTION INTENSITY
[Arb.unit]

BLACK PP RESIN

BLACK PS RESIN

BLACK ABS RESIN

WHITE ABS RESIN

4.1    4.2    4.3    4.4    4.5    4.6    4.7    4.8

WAVELENGTH BANDWIDTH [μm]

EP 3 477 282 B1

# FIG. 4

START

S1 | CONVEY RESIN

S2 | IRRADIATE RESIN WITH LIGHT

S3 | DETECT REFLECTED LIGHT FROM RESIN

S4 | CALCULATE SPECTRAL INTENSITY OF RANGE AFFECTED BY CARBON DIOXIDE

S5 | EVALUATE SPECTRUM

S6 | DETERMINE RESIN COLOR

END

FIG. 5

# FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5367145 B
- JP 6160475 B

**Non-patent literature cited in the description**

- **WOLFGANG BECKER et al.** Detection of Black Plastics in the Middle Infrared Spectrum (MIR) Using Photon Up-Conversion Technique for Polymer Recycling Purposes. *Polymers,* 2017, vol. 9, 435
- Identification of black plastics using an upconversion based mid-infrared imaging spectrograph. **HOGSTEDT LASSE et al.** CLEO/EUROPE-EQEC. IEEE, 2017
- **ABRAHAM VÁZQUEZ-GUARDADO et al.** Multi-spectral infrared spectroscopy for robust plastic identification. *Applied Optics,* 18 August 2015, vol. 54 (24), 7396
- **OFFER ROZENSTEIN et al.** Development of a new approach based on midwave infrared spectroscopy for post-consumer black plastic waste sorting in the recycling industry. *WASTE MANAGEMENT,* 20 July 2017, vol. 68, 38-44